# DEMANDE DE BREVET EUROPEEN

(11) **EP 1 536 201 A1**
(43) Date de publication de la demande: **01.06.2005**
(21) Numéro de dépôt: 04292413.4
(22) Date de dépôt: 12.10.2004
(51) Int. Cl.: G01B 5/28, G01B 7/008, G01B 7/28, G01B 21/04, G01B 21/20, H01R 39/08, B25J 17/00

(54) **Dispositif de connexion associé à un bras d'appareil de mesure tridimensionnelle à bras articulés**

(30) Priorité: 29.10.2003 FR 0312674
(71) Demandeur: Granger, Romain, 41800 Lavardin (FR)
(72) Inventeur: Granger, Romain, 41800 Lavardin (FR)
(74) Mandataire: Jaunez, Xavier

(57) **Abrégé**

L'invention concerne un dispositif de connexion associé à un bras (10) d'appareil de mesure tridimensionnelle à bras articulés, comportant un ensemble mobile (100) et un ensemble fixe (200), ainsi que des moyens de connexion (120) destinés à assurer une liaison électrique entre ces deux ensembles(100, 200).

Conformément à l'invention, l'ensemble mobile (100) comporte un premier et un deuxième composants coaxiaux adjacents (105 ; 106), le premier composant (105) étant solidaire en rotation de l'extrémité d'articulation (12) du bras et étant relié au deuxième composant (106) par un système d'accouplement (110) à tocs successifs de façon que ledit deuxième composant ne soit entraîné en rotation qu'après une rotation dépassant largement un tour dans un même sens dudit premier composant, et les moyens de connexion (120) comportent des organes de contact en regard (121, 122), respectivement portés par l'ensemble fixe (200) et le deuxième composant (106), agencés pour assurer une liaison électrique permanente en fonctionnement normal et une liaison limitée à une courte plage angulaire de rotation lorsque le deuxième composant est entraîné en rotation par le premier composant.

## Description

### DOMAINE DE L'INVENTION

La présente invention concerne un dispositif de connexion associé à un bras d'appareil de mesure tridimensionnelle à bras articulés.

### ARRIERE-PLAN DE L'INVENTION

Il existe de très nombreux documents de brevet illustrant des structures d'appareils de mesure tridimensionnelle à bras articulés comportant une pluralité d'axes d'articulation. Les appareils de mesure les plus récents comportent ainsi jusqu'à six axes.

On pourra se référer aux documents US-A-5 402 582, US-A-5 611 147, US-A-5 794 356, et US-A-5 926 782. D'une façon générale, les appareils de mesure tridimensionnelle à bras articulés comportent classiquement un ensemble mobile rigidement solidaire d'une extrémité d'articulation du bras et monté dans le corps tubulaire du bras pour tourner autour de l'axe longitudinal dudit bras, et un ensemble fixe monté à l'autre extrémité du bras, ainsi que des moyens de connexion destinés à assurer une liaison électrique entre ces deux ensembles.

Plus récemment, il est apparu intéressant de perfectionner les structures classiques d'appareils de mesure à bras articulés de telle façon que l'opérateur puisse effectuer plusieurs tours de rotation pour l'un au moins des bras autour de l'axe central de celui-ci. Or, les appareils de mesure tridimensionnelle à bras articulés sont classiquement équipés, dans chacun de leurs bras, d'un codeur angulaire permettant une mesure de la rotation autour de l'axe concerné. Par suite, le souhait d'une très grande plage de rotation, voire d'une plage de rotation infinie, implique de résoudre le problème de la connexion destinée à assurer la liaison électrique entre les éléments fixes et les éléments mobiles.

On pourra se référer à ce titre aux documents US-A-4 888 877, US-A-4 593 470, et DE-A-41 40 294.

Plus récemment, on a développé des agencements utilisant des connecteurs tournants à pistes circulaires, conformément à une technologie déjà bien connue dans les accouplements d'organes de machines, de façon à parvenir à une rotation pouvant être considérée comme infinie. On pourra à ce titre se référer au document US-A-5 829 148. Ce dernier document enseigne de prévoir que certaines au moins des articulations comportent un degré de liberté permettant un balayage sur un arc non limité, avec un sous-ensemble de joint tournant à contacts multiples servant à transmettre des signaux électriques au travers des articulations.

Finalement, aucune des solutions exposées dans les brevets précités ne donne totalement satisfaction.

En effet, si l'on veut limiter la plage de rotation possible au niveau d'une articulation entre deux bras adjacents d'un appareil de mesure tridimensionnelle, on peut prévoir un système de butée associé à une plage de rotation maximale désirée, par exemple au moins 700 à 720 degrés. Si le système de butée est une butée mécanique rigide, l'arrivée en butée provoque inévitablement un choc qui se transmet dans la structure des bras articulés, ce qui induit inévitablement un décalibrage de l'appareil. Dans ce cas, il est nécessaire de procéder à nouveau à une étape de calibrage avant d'effectuer de nouvelles mesures. Pour éviter de tels chocs, on peut prévoir une butée plus souple sous la forme par exemple d'une butée fusible. Dans ce cas, lorsque l'on arrive en butée, si l'opérateur exerce un certain couple sur le bras concerné, il provoque la rupture de la butée, ce qui évite la génération de chocs excessifs. Cependant, malgré le gain en sécurité obtenu, on ne peut empêcher que les fils de connexion électrique se vrillent et fassent des noeuds ou se cassent. Ceci amène donc à considérer les différents systèmes de butées envisageables comme peu satisfaisants.

Pour éviter les inconvénients précités inhérents aux butées rigides ou souples, on a seulement proposé des connecteurs tournants avec des pistes circulaires et des balais de frottement. En particulier, le document US-A-5 829 148 précité comporte un système de connecteur tournant à tambour cylindrique portant des pistes circulaires qui sont contactées par des balais fixes associés. Cependant, ce type d'agencement n'est pas non plus totalement satisfaisant au regard de la qualité du contact électrique entre les balais et les pistes. Par suite, on ne peut écarter la génération de parasites, qui viennent perturber les signaux de mesure. De plus, la nécessité d'exercer un couple de rotation non négligeable sur le bras concerné risque également d'affecter la précision de la mesure : en effet, même une légère torsion appliquée sur un bras articulé d'un appareil de mesure à bras multiples peut produire une erreur de quelques microns au niveau du capteur terminal, et ainsi fausser la mesure de façon plus ou moins importante.

### OBJET DE L'INVENTION

La présente invention vise à concevoir un dispositif de connexion associé à un bras d'appareil de mesure tridimensionnelle à bras articulés ne présentant pas les inconvénients précités, et permettant d'avoir une plage de rotation d'étendue satisfaisante pour les articulations concernées des bras articulés sans perte d'alimentation électrique et sans risque de décalibrage altérant la précision de la mesure.

### DEFINITION GENERALE DE L'INVENTION

Le problème précité est résolu conformément à l'invention grâce à un dispositif de connexion associé à un bras d'appareil de mesure tridimensionnelle à bras articulés, comportant un ensemble mobile rigidement solidaire d'une extrémité d'articulation du bras et monté dans le corps tubulaire du bras pour tourner autour de l'axe longitudinal dudit bras, et un ensemble fixe monté à l'autre extrémité du bras, ainsi que des moyens de connexion destinés à assurer une liaison électrique entre ces deux ensembles, ledit dispositif étant remarquable en ce que l'ensemble mobile comporte un premier et un deuxième composants coaxiaux adjacents présentant chacun un passage central pour le passage de fils électriques de connexion, le premier composant étant solidaire en rotation de l'extrémité d'articulation du bras et étant relié au deuxième composant par un système d'accouplement à tocs successifs de façon que ledit deuxième composant ne soit entraîné en rotation qu'après une rotation dépassant largement un tour dans un même sens dudit premier composant, et en ce que les moyens de connexion comportent des organes de contact en regard, respectivement portés par l'ensemble fixe et le deuxième composant de l'ensemble mobile, lesdits organes de contact étant agencés pour assurer une liaison électrique permanente en fonctionnement normal sans entraînement en rotation du deuxième composant et une liaison électrique limitée à une courte plage angulaire de rotation lorsque ledit deuxième composant est entraîné en rotation par le premier composant.

Ainsi, le système d'accouplement à tocs successifs autorise des plages de rotation importantes, en particulier pouvant atteindre deux ou trois ou quatre tours, et ce sans perturber la mesure par des frottements indésirables, tout en conservant le contact électrique, du fait de l'immobilité du deuxième composant de l'ensemble mobile. En bout de course de rotation, le deuxième composant de l'ensemble mobile est alors seulement entraîné en rotation et, après une courte plage de rotation prédéterminée, le contact est interrompu, ce qui permet d'alerter immédiatement l'opérateur qui peut alors revenir en arrière. On verra alors qu'il suffit de repasser à nouveau devant un index angulaire pour redémarrer l'appareil en cas de dépassement de la plage angulaire prévue. On est en outre assuré de ne pas perdre la précision de mesure car la rupture du contact par déplacement de la plage prévue fait que le couple exercé sur le bras est alors sans effet sur la mesure, car précisément l'appareil n'est plus en état d'effectuer une quelconque mesure du fait de la coupure de l'alimentation électrique.

De préférence, le système d'accouplement à tocs successifs prévu entre les deux composants de l'ensemble mobile est agencé pour s'enclencher après une rotation d'environ trois tours dans un même sens du premier composant par rapport au deuxième composant. En particulier, il sera avantageux de prévoir que le dispositif comporte en outre un système complémentaire d'indexage agencé entre l'ensemble mobile et le corps tubulaire du bras, ledit système d'indexage étant agencé pour procurer un point dur perceptible par l'opérateur de l'appareil de mesure lorsque la même plage d'environ trois tours est dépassée. La mise à disposition d'un tel point dur est extrêmement intéressante pour l'opérateur, car il suffit à celui-ci d'effectuer un tour dans un sens ou dans l'autre pour se repérer. Avec un tour ou deux en arrière, l'opérateur permet un nouveau passage devant le codeur, sans qu'aucune réinitialisation ne soit nécessaire.

Avantageusement, le premier composant de l'ensemble mobile est un arbre creux faisant fonction d'arbre de codeur pour un codeur angulaire agencé dans le bras pour mesurer la rotation de l'extrémité de rotation autour de l'axe longitudinal dudit bras. Un tel agencement permet d'avoir une structure particulièrement compacte.

Avantageusement encore, le deuxième composant de l'ensemble mobile comporte deux disques coaxiaux reliés par un arbre creux, dont un premier disque faisant partie du système d'accouplement à tocs successifs et un second disque portant, sur sa face interne, des organes de contact qui coopèrent avec les organes de contact portés par l'ensemble fixe.

De préférence alors, les organes de contact portés par le second disque du second composant de l'ensemble mobile comportent des pistes coaxiales en forme de segments circulaires définissant la courte plage angulaire de rotation, et les organes de contact portés par l'ensemble fixe comportent au moins un bloc de frotteurs dont les frotteurs coopèrent avec les pistes respectives des autres organes de contact. En particulier, les organes de contact portés par l'ensemble fixe comportent deux blocs de frotteurs espacés circonférentiellement d'un angle correspondant sensiblement à la courte plage angulaire de rotation, de façon que les frotteurs des deux blocs soient au contact des pistes respectives seulement dans une position centrale du second composant de l'ensemble mobile qui correspond à la position de fonctionnement normal.

On pourra alors prévoir que la courte plage angulaire de rotation est de l'ordre de 20 à 30 degrés.

Par ailleurs, la coopération entre les frotteurs du ou des blocs de frotteurs et les pistes coaxiales pourra être obtenue par simple rotation relative, ou en variante par translation axiale et rotation relatives.

De préférence enfin, les fils électriques de connexion passant à l'intérieur des deux composants de l'ensemble mobile sont reliés aux pistes coaxiales portées par le second disque du second composant de l'ensemble mobile, le ou les blocs de frotteurs portés par l'ensemble fixe servant à liaison des fils électriques de connexion associés à un ensemble de carte de codeur solidaire de l'ensemble fixe.

D'autres caractéristiques et avantages de l'invention apparaîtront plus clairement à la lumière de la description qui va suivre et des dessins annexés, concernant un mode de réalisation particulier.

### BREVE DESCRIPTION DES DESSINS

Il sera fait référence aux figures des dessins annexés, où :
- la figure 1 illustre en perspective un appareil de mesure tridimensionnelle à bras articulés dont certaines des articulations sont équipées d'un dispositif de connexion conforme à l'invention ;
- les figures 2 et 3 illustrent, respectivement en perspective et en coupe axiale, l'un des bras de l'appareil de mesure précité, permettant de distinguer l'agencement général des différents composants de l'ensemble mobile et de l'ensemble fixe, ainsi que l'agencement des moyens de connexion spécifiques destinés à assurer la liaison électrique entre ces deux ensembles ;
- la figure 4 est une coupe axiale à plus grande échelle illustrant la partie du bras précédent qui s'étend au-delà de l'extrémité d'articulation dudit bras ;
- les figures 5 et 6 illustrent, respectivement en coupe axiale et en perspective, la partie du dispositif de connexion selon l'invention concernant le système d'accouplement à tocs successifs et l'agencement des organes de contact homologues (en position de contact) ;
- la figure 7 illustre en perspective le composant de l'ensemble mobile qui porte des pistes coaxiales en forme de segments circulaires faisant partie des organes de contact associés à l'ensemble mobile ;
- les figures 8 et 9 sont des vues partielles en perspective illustrant les organes de contact associés respectivement à l'ensemble fixe et à l'ensemble mobile ;
- les figures 10 et 11 illustrent enfin, respectivement en coupe axiale et en perspective isolée, un système complémentaire d'indexage agencé entre l'ensemble mobile et le corps tubulaire du bras pour procurer un point dur perceptible par l'opérateur.

### DESCRIPTION DETAILLEE DU MODE DE REALISATION PREFERE DE L'INVENTION

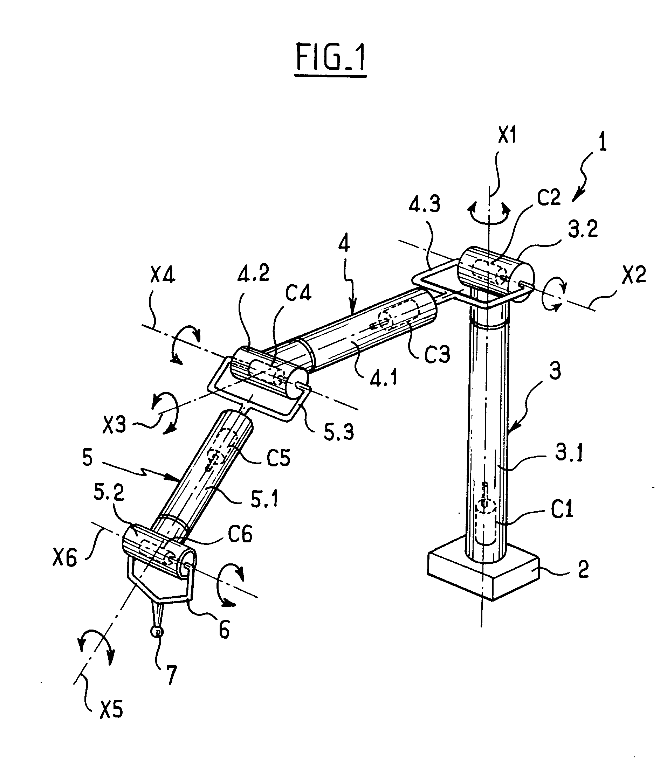

Il sera fait référence aux figures 1 à 11 pour décrire maintenant plus en détail la structure d'un bras d'appareil de mesure tridimensionnelle à bras articulés équipé d'un dispositif de connexion conforme à l'invention.

La figure 1 permet de distinguer un appareil de mesure tridimensionnelle à bras articulés noté 1, comportant en l'espèce un socle de support 2 sur lequel est monté un premier bras tournant 3, suivi de deux bras articulés 4,5 et d'un capteur de mesure 7 monté en extrémité d'un support articulé en forme de chape 6. Une telle structure d'appareil est tout à fait classique dans sa généralité.

Le premier bras 3 comporte un corps tubulaire 3.1 d'axe X1, terminé par une extrémité d'articulation 3.2 qui peut tourner autour de l'axe central X1. L'extrémité d'articulation 3.2 porte une chape pivotante 4.3 faisant partie du bras suivant 4, laquelle chape peut pivoter autour d'un axe noté X2. Le bras suivant 4 est relié à la chape pivotante 4.3, et comporte un corps tubulaire 4.1 et une extrémité d'articulation 4.2, cette dernière pouvant tourner autour de l'axe central du bras 4 noté X3. L'extrémité d'articulation 4.2 est à son tour équipée d'une chape pivotante 5.3 faisant partie du bras suivant 5. La chape 5.3 peut pivoter autour de l'axe X4 de l'extrémité d'articulation 4.2 du bras 4. Ce dernier bras 5 associé à la chape 5.3 comporte à son tour un corps tubulaire 5.1 et une extrémité d'articulation 5.2, cette dernière pouvant tourner autour de l'axe central X5 dudit bras. Enfin, l'extrémité d'articulation 5.2 est équipée d'une chape terminale 6 qui se termine par un capteur de mesure 7. La chape terminale 6 et le capteur de mesure 7 associé peuvent pivoter autour de l'axe X6 de l'extrémité d'articulation 5.2 du bras 5.

On constate ainsi la présence de six axes d'articulation, notés X1, X2, X3, X4, X5, X6. Il s'agit donc d'un bras de mesure dit à six axes. Les angles de rotation autour de chacun de ces axes sont mesurés individuellement par des codeurs angulaires associés intégrés aux parties concernées des bras mobiles, ces codeurs étant notés ici C1, C2, C3, C4, C5, C6 en association avec les axes correspondants X1, X2, X3, X4, X5, X6.

Les pivotements des chapes 4.3, 5.3 et 6 autour des axes respectifs X2, X4, X6 sont de facto limités par construction à un angle qui est inférieur à 360 degrés, du fait de la butée contre une face ou l'autre du corps de bras associé. Par suite, le problème des fils associés au bus équipant en général ce type d'appareil ne pose pas de difficultés particulières du fait de la limitation structurelle de la plage de rotation possible, de sorte que ces fils ne risquent pas de se vriller ou de se casser.

Par contre, pour l'axe X1, et surtout pour les axes X3 et X5, il est intéressant pour l'opérateur de disposer d'une plage de rotation étendue, sans être pour autant illimitée. Dans la pratique, on cherchera à avoir au moins 700 à 720 degrés (un peu moins de deux tours), ou mieux 1050 à 1080 degrés (un peu moins de trois tours) pour la plage de rotation possible avec une conservation du contact électrique permanent au niveau des moyens de connexion prévus, mais il ne faut pas que cette rotation induise un décalibrage du bras concerné.

On va maintenant décrire plus en détail les organes équipant l'un des bras pour lequel une large plage de rotation est recherchée avec maintien du contact électrique, le bras pouvant être de préférence le bras 4 ou 5 de l'appareil précédemment décrit de la figure 1.

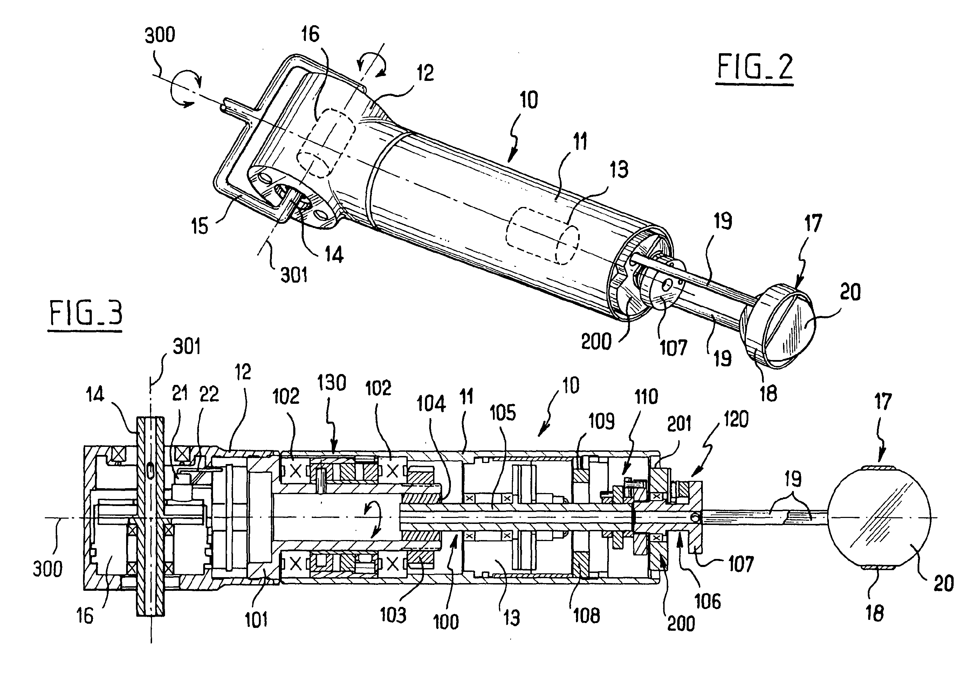

Sur les figures 2 à 11 auxquelles on va maintenant se référer, le bras concerné sera noté 10 et son extrémité d'articulation 12, étant entendu que la structure décrite pourra s'appliquer à l'un quelconque des bras articulés de l'appareil de mesure pour lequel on souhaite avoir une large plage de rotation avec maintien du contact électrique, ladite plage étant cependant limitée angulairement.

La figure 2 permet ainsi de distinguer un bras 10 dont l'axe longitudinal est noté 300. Le bras 10 comporte un corps tubulaire 11, et une extrémité d'articulation 12 montée dans le corps tubulaire 11 du bras pour tourner autour de l'axe longitudinal 300 dudit bras. L'extrémité d'articulation 12 est équipée d'une chape tournante 15 (visible seulement sur la figure 2) se raccordant à un axe 14, correspondant à l'axe de pivotement noté 301 qui est perpendiculaire à l'axe longitudinal 300. La rotation du bras 10 autour de l'axe transversal 301 est repérée par un codeur angulaire associé 16 logé dans l'extrémité d'articulation 12, tandis que la rotation de l'extrémité d'articulation 12 autour de l'axe central 300 est repérée par un codeur angulaire 13 logé dans le corps tubulaire 11. On distingue également sur la figure 2 un disque 107 formant la partie terminale d'un ensemble mobile du dispositif de connexion selon l'invention, ainsi qu'une plaque terminale 200 appartenant à un ensemble fixe dudit dispositif de connexion. Deux colonnettes 19, s'étendant longitudinalement de part et d'autre du disque 107, en étant solidaires de la plaque 200, supportent à leurs extrémités un ensemble 17 associé à une carte de codeur 20. En l'espèce, la carte de codeur 20 est constituée par une plaque qui est supportée par un support annulaire 18.

La figure 3 permet de mieux distinguer les différents organes concernés.

Dans l'extrémité l'articulation 12 du bras 10, on retrouve l'axe 14 associé à l'axe d'articulation 301, qui constitue l'axe du codeur 16 dont la carte associée n'est pas représentée ici. Les fils du codeur sont soumis tout au plus aux déplacements correspondants à un demi-tour de rotation, de sorte que le problème d'un possible vrillage de ces fils de connexion ne se pose pas. On distingue également un élément de bus 21 duquel partent des fils 22.

L'extrémité d'articulation 12 est rigidement solidaire d'un ensemble mobile qui est monté dans le corps tubulaire 11 du bras pour tourner autour de l'axe longitudinal 300 dudit bras. L'ensemble mobile 100 comporte ainsi une pièce tubulaire 101 qui est rigidement solidaire de l'extrémité d'articulation 12 du bras 10, et qui est montée pour tourner autour de l'axe central 300 par interposition de deux roulements 102 en appui contre le corps tubulaire 11. L'ensemble est serré par un écrou 103 qui est vissé sur l'extrémité filetée de la pièce tournante 101. La pièce tournante 101 sert à entraîner en rotation autour de l'axe central 300, un ensemble mobile noté 100, grâce à une bague d'accouplement 104, qui est ici une bague élastique.

Conformément à une première caractéristique de l'invention, l'ensemble mobile 100 comporte un premier et un deuxième composants coaxiaux adjacents 105, 106 présentant chacun un passage central 105.1, 106.1 pour le passage de fils électriques de connexion, le premier composant 105 étant solidaire en rotation de l'extrémité d'articulation 12 du bras et étant relié au deuxième composant 106 par un système d'accouplement 110 à tocs successifs de façon que ledit deuxième composant ne soit entraîné en rotation qu'après une rotation dépassant largement un tour dans un même sens dudit premier composant.

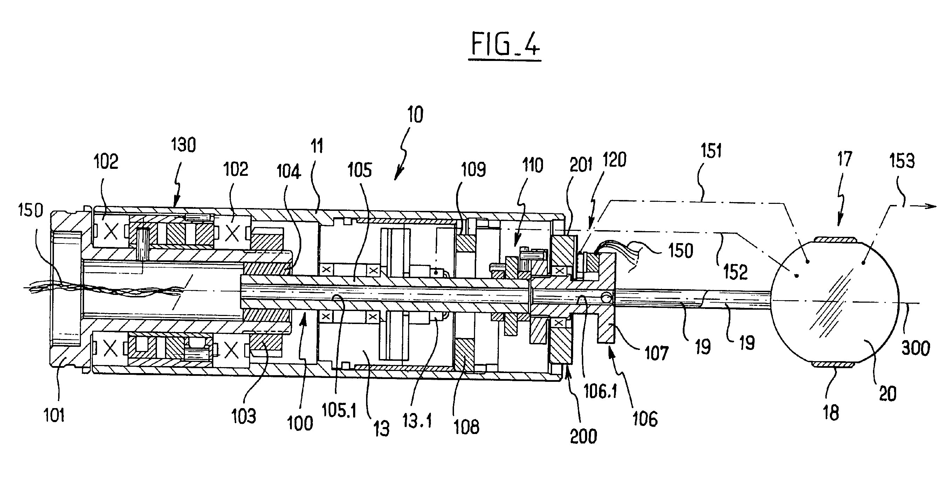

Ces différents organes sont mieux visibles sur les figures 4 à 6.

Le premier composant 105 de l'ensemble mobile 100 est un arbre creux faisant fonction d'arbre de codeur pour le codeur angulaire 13 qui est agencé dans le bras 10 pour mesurer la rotation de l'extrémité de rotation 12 autour de l'axe longitudinal 300 dudit bras. On distingue sur la figure 4 le codeur 13 avec sa prise multi-fils 13.1 (en général pour onze fils). Des fils électriques de connexion, schématisés sur la figure 4 une ligne en trait mixte 152, relient la prise 13.1 à la carte de codeur 20. On notera à ce titre que la bague 108 (servant à assurer le maintien en place du codeur 13 dans le corps tubulaire 11) présente localement un méplat 109, et que la plaque terminale fixe 200 présente également un méplat correspondant 201, ces deux méplats 109 et 201 permettant de délimiter avec la surface intérieure en regard du corps tubulaire 11 un passage pour les fils 152. Par contre, les fils notés 150 seulement visibles sur la figure 4, en général au nombre de cinq, qui passent dans le passage central de l'ensemble mobile 100, c'est-à-dire dans les passages 105.1 et 106.1 des deux composants 105 et 106 dudit ensemble, ressortent en extrémité du bras pour être reliés à des organes de contact faisant partie des moyens de connexion 120 qui seront décrits plus en détail ci-après. D'autres fils de liaison, schématisés par la ligne 151, relient d'autres organes contacts (homologues des précédents) à la carte de codeur 20. Les fils de liaison repartant de la carte de codeur 20 sont quant à eux simplement schématisés par une ligne 153.

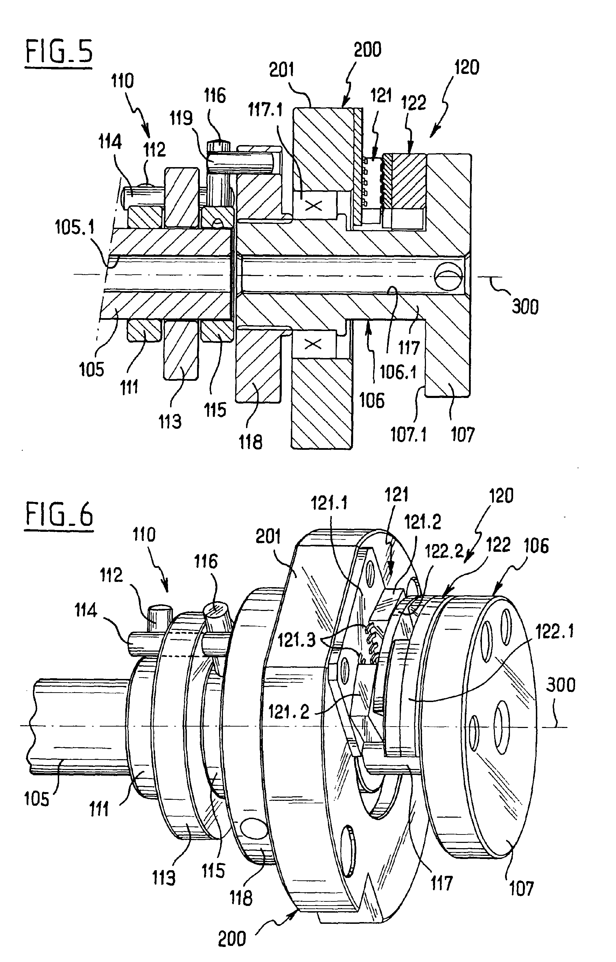

On va maintenant se référer plus particulièrement aux figures 5 et 6 pour décrire le système d'accouplement 110 à tocs successifs qui est interposé entre les deux composants coaxiaux adjacents 105, 106 de l'ensemble mobile 100.

En l'espèce, on a prévu un système d'accouplement 110 agencé pour s'enclencher après une rotation d'environ trois tours dans un même sens du premier composant 105 par rapport au deuxième composant 106. A cet effet, l'arbre creux 105 constituant le premier composant est équipé d'un premier disque 111 qui lui est solidaire en rotation. Le disque 111 présente un doigt radial 112 qui peut coopérer avec un doigt axial 114 solidaire d'un deuxième disque 113 monté en rotation libre et sans frottement sur l'arbre creux 105. Ainsi, après une rotation légèrement inférieure à un tour complet (du fait de l'encombrement angulaire du doigt axial 114), la poursuite de la rotation de l'arbre creux 105 entraîne la rotation du disque 113. Un troisième disque 115 est également prévu, tournant lui aussi librement et sans frottement sur l'arbre creux 105. Le disque 115 est équipé d'un doigt radial 116 avec lequel peut coopérer l'autre partie du doigt axial 114 précité. Par suite, lorsqu'on arrive à une rotation légèrement inférieure à deux tours, ce dernier disque 115 est à son tour entraîné en rotation. Enfin, le deuxième composant 106 comporte un disque 118 qui est équipé d'un doigt axial 119 avec lequel peut coopérer le doigt radial 116 du disque 115. Finalement, lorsqu'une rotation dans un même sens est effectuée sur environ trois tours par le premier composant 105, alors seulement le deuxième composant 106 de l'ensemble mobile est à son tour entraîné en rotation autour de l'axe 300.

Par ailleurs, les moyens de connexion notés 120, destinés à assurer une liaison électrique entre l'ensemble mobile 100 et l'ensemble fixe 200, comportent des organes de contact en regard 121, 122 respectivement portés par l'ensemble fixe 200 et le deuxième composant 106 de l'ensemble mobile 100. Conformément à une seconde caractéristique de l'invention, ces organes de contact sont agencés pour assurer une liaison électrique permanente en fonctionnement normal sans entraînement en rotation du deuxième composant de l'ensemble mobile, et une liaison électrique limitée à une courte plage angulaire de rotation lorsque ledit deuxième composant est entraîné en rotation par le premier composant.

Ainsi, les organes de contact 121 et 122, dont la structure précise sera décrite ci-après, sont normalement dans une position médiane, et n'en bougent pas dans la mesure où le deuxième composant 106 n'est pas entraîné en rotation. Autrement dit, lors du fonctionnement normal, l'opérateur peut tout à loisir faire tourner le bras concerné sur une rotation de un, deux ou un peu moins de trois tours selon le cas, sans qu'il y ait de choc perceptible pour la machine, grâce à l'entraînement quasiment sans frottements réalisé par le système d'accouplement 110 à tocs successifs, de sorte que les mesures effectuées ne sont aucunement perturbées. Il convient à cet effet d'observer que la mise en coopération successive des doigts 112, 114, puis 114, 116, et enfin 116, 119 ne génère aucun choc perceptible. S'il s'avère que l'opérateur atteint la plage de rotation maximale, prévue en l'espèce légèrement inférieure à trois tours, alors seulement le deuxième composant 106 est entraîné en rotation par le premier composant 105, et le contact électrique va être très rapidement arrêté, ce qui évite toute présence de mesure falsifiée.

On va maintenant se référer aux figures 6 à 9 pour décrire plus en détail la structure des organes de contact 121 et 122 formant les moyens de connexion 120 du dispositif de connexion de l'invention.

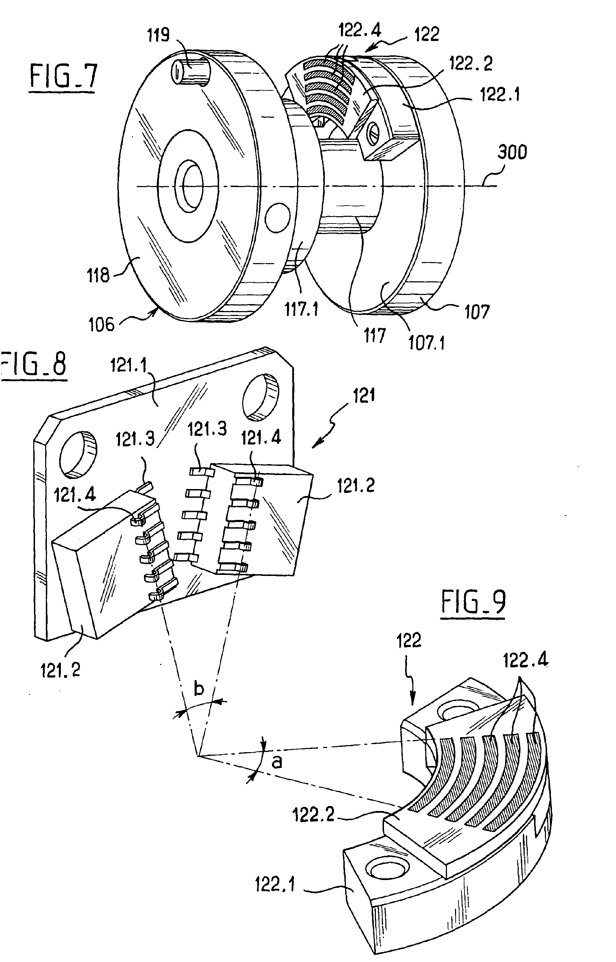

Les organes de contact 122 portés par le second disque 107 du second composant 106 de l'ensemble mobile 100 comportent une pluralité de pistes coaxiales 122.4 en forme de segments circulaires. A cet effet, un organe de support en segment de bague cylindrique 122.1 est vissé contre la face interne 107.1 du disque 107 du deuxième composant 106. Sur ce support 122.1 est montée une plaquette 122.2 dont la face libre porte les pistes 122.4 en forme de segments circulaires. Le nombre des pistes sera bien entendu fonction du nombre de contacts désiré, et on a illustré ici un ensemble de cinq pistes dans la mesure où l'on rencontre fréquemment une situation avec cinq fils. On retrouve sur la figure 9 cet ensemble de pistes coaxiales 122.4 sur leur support commun. On a illustré en a l'angle correspondant, qui définit ainsi la courte plage angulaire de rotation, dans un sens ou dans l'autre, qui correspond à une rupture de l'alimentation électrique.

Les organes de contact 121 portés par l'ensemble fixe 200 comportent quant à eux au moins un bloc de frotteurs 121.2 dont les frotteurs 121.4 coopèrent avec les pistes respectives 122.4 des autres organes de contact 122. En l'espèce, les organes de contact 121 comportent deux blocs de frotteurs 121.2 espacés circonférentiellement d'un angle b, cet angle b correspondant sensiblement à la courte plage angulaire de rotation précitée. Ainsi, les frotteurs 121.4 des deux blocs 121.2 sont au contact des pistes respectives 122.4 seulement dans une position centrale du second composant 106 de l'ensemble mobile 100, position qui correspond à la position de fonctionnement normal, ou bien encore sur une très faible plage angulaire de part et d'autre de cette position centrale. A titre indicatif, la courte plage angulaire de rotation pourra être de l'ordre de 20 à 30 degrés. Les deux blocs de frotteurs 121.1 comportent également des pattes de connexion 121.3 sur lesquelles sont soudés les fils de liaison symbolisés sur la figure 4 par la ligne en trait mixte 151, reliant ainsi les organes de contact fixes 122.2 à la carte de codeur 20.

La disposition angulaire relative des blocs de frotteurs et des pistes conductrices en forme de segments circulaires permet, si on le souhaite, de couper l'alimentation électrique dès que l'on s'écarte de la position médiane de fonctionnement.

En l'espèce, la coopération entre les frotteurs 121.4 des blocs de frotteurs 121.2 et les pistes coaxiales 122.4 est obtenue par simple rotation rotative. On pourra naturellement prévoir, dans une variante qui n'est pas illustrée ici, que cette coopération est obtenue par translation axiale et rotation relatives, par exemple en agençant un système de cames qui éloigne ou rapproche les organes de contact mobiles des organes de contact fixes.

Dans la pratique, on prévoira une alarme sonore équipant l'appareil de mesure, qui émet un signal lorsque la plage maximale de rotation pour l'extrémité d'articulation du bras concerné est atteinte, en l'espèce un peu moins de trois tours complets. Si cette limite est dépassée, le contact électrique est coupé, mais l'opérateur peut effectuer encore un tour jusqu'à ce que le contact soit rétabli. A ce moment là, un témoin lumineux, par exemple une diode électroluminescente, permet d'informer l'opérateur de cette situation. Il suffit alors à l'opérateur d'imprimer une rotation dans le sens inverse, d'un tour ou deux, pour repasser devant le codeur pour redémarrer automatiquement l'appareil, sans qu'il soit nécessaire d'effectuer une quelconque manoeuvre de recalibrage.

Pour aider l'opérateur dans cette manoeuvre, il est intéressant de prévoir un système complémentaire d'indexage agencé entre l'ensemble mobile 100 et le corps tubulaire 11, ledit système étant agencé pour procurer un point dur perceptible par l'opérateur de l'appareil de mesure lorsque la même plage d'environ trois tours complets est dépassée.

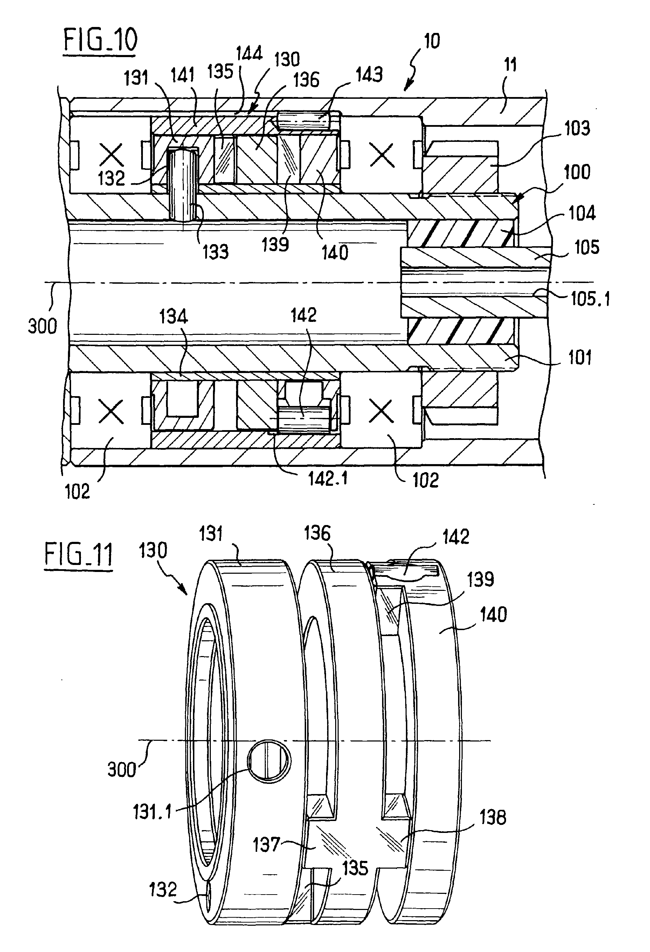

Un tel système complémentaire d'indexage a été prévu ici, et on pourra se référer aux figures 10 et 11 sur lequel ledit système est mieux visible. On distingue alors un système d'indexage 130 comportant plusieurs anneaux juxtaposés agencés pour un entraînement successif, de façon similaire à ce qui a été prévu pour le système d'accouplement 110 à tocs successifs. On distingue ainsi un premier anneau 131 qui est équipé d'un doigt axial 132 destiné à coopérer avec un doigt radial 133 rigidement solidaire de la pièce tournante 101. Ainsi, une fois qu'un premier tour a été bouclé, les doigts 133 et 132 coopèrent, et l'anneau 131 est alors entraîné en rotation sans frottement sur son palier 134. L'anneau 131 porte un taquet 135 destiné à coopérer avec un taquet homologue 137 prévu en saillie sur l'anneau suivant 136. Les taquets 135 et 137 coopèrent après un nouveau tour de rotation. De la même façon, l'anneau 136 porte un deuxième taquet 138 sur son autre face, qui est destiné à coopérer avec un taquet 139 ménagé en saillie sur le dernier anneau 140. Sur la figure 11, on distingue un perçage radial 131.1 sur l'anneau 131, qui vise à faciliter la mise en place du doigt radial 133. Ainsi, après une rotation d'environ trois tours de la pièce 101, correspondant exactement à la rotation de l'arbre creux 105 et la venue en accouplement en rotation du deuxième composant 106, les trois anneaux 131, 136 et 140 tournent alors de conserve.

Le point dur est obtenu par un rouleau 142 qui sort de son logement 142.1 prévu dans une chemise extérieure 141, laquelle chemise 141 est bloquée en rotation par rapport au corps tubulaire 11 par un doigt 143 reçu dans une gorge axiale 144 dudit corps 11. Ainsi, l'opérateur a une bonne perception du déplacement angulaire grâce au point dur, ce qui facilite la manoeuvre de retour en arrière pour faire repasser l'ensemble devant le codeur. Il est à noter que le palier 134 et la chemise 141 ont une longueur déterminée en vue du réglage de la précontrainte des roulements 102, l'ensemble étant bloqué par l'écrou 103.

On est ainsi parvenu à réaliser un dispositif de connexion extrêmement performant, dans la mesure où il permet d'éviter les inconvénients des techniques antérieures sur la qualité des contacts électriques et la nécessité d'exercer un couple de rotation, et ce sans présence de butée génératrice de choc ou de vrillage des fils de connexion électrique. De plus, la précision de la mesure n'est aucunement affectée, même si une certaine torsion est appliquée sur le bras à manoeuvrer, ce qui n'était pas le cas pour les systèmes antérieurs à connecteurs tournants du type à rotation infinie.

L'invention n'est pas limitée au mode de réalisation qui vient d'être décrit, mais englobe au contraire toute variante reprenant, avec des moyens équivalents, les caractéristiques essentielles énoncées plus haut.

En particulier, on pourra prévoir un système d'accouplement à tocs successifs limitant la plage totale à un angle différent, par exemple environ deux tours ou environ quatre tours. Il suffira pour cela de prévoir le nombre adéquat de disques et de doigts. Bien entendu, si un système complémentaire d'indexage est prévu, le nombre d'anneaux constitutifs du système d'indexage sera alors prévu en rapport avec l'agencement correspondant du système d'accouplement à tocs successifs.

## Revendications

1. Dispositif de connexion associé à un bras (10) d'appareil de mesure tridimensionnelle (1) à bras articulés, comportant un ensemble mobile (100) rigidement solidaire d'une extrémité d'articulation (12) du bras (10) et monté dans le corps tubulaire (11) du bras pour tourner autour de l'axe longitudinal (300) dudit bras, et un ensemble fixe (200) monté à l'autre extrémité du bras (10), ainsi que des moyens de connexion (120) destinés à assurer une liaison électrique entre ces deux ensembles (100,200), **caractérisé en ce que** l'ensemble mobile (100) comporte un premier et un deuxième composants coaxiaux adjacents (105; 106) présentant chacun un passage central (105.1; 106.1) pour le passage de fils électriques de connexion (150), le premier composant (105) étant solidaire en rotation de l'extrémité d'articulation (12) du bras et étant relié au deuxième composant (106) par un système d'accouplement (110) à tocs successifs de façon que ledit deuxième composant ne soit entraîné en rotation qu'après une rotation dépassant largement un tour dans un même sens dudit premier composant, et **en ce que** les moyens de connexion (120) comportent des organes de contact en regard (121, 122) respectivement portés par l'ensemble fixe (200) et le deuxième composant (106) de l'ensemble mobile (100), lesdits organes de contact étant agencés pour assurer une liaison électrique permanente en fonctionnement normal sans entraînement en rotation du deuxième composant (106), et une liaison électrique limitée à une courte plage angulaire de rotation lorsque ledit deuxième composant est entraîné en rotation par le premier composant (105).

2. Dispositif selon la revendication 1, **caractérisé en ce que** le système d'accouplement à tocs successifs (110) prévu entre les deux composants (105, 106) de l'ensemble mobile (100) est agencé pour s'enclencher après une rotation d'environ trois tours dans un même sens du premier composant (105) par rapport au deuxième composant (106).

3. Dispositif selon la revendication 2, **caractérisé en ce qu'**il comporte en outre un système complémentaire d'indexage (130) agencé entre l'ensemble mobile (100) et le corps tubulaire (11) du bras, ledit système d'indexage étant agencé pour procurer un point dur perceptible par l'opérateur de l'appareil de mesure (1) lorsque la même plage d'environ trois tours est dépassée.

4. Dispositif selon l'une des revendications 1 à 3, **caractérisé en ce que** le premier composant (105) de l'ensemble mobile (100) est un arbre creux faisant fonction d'arbre de codeur pour un codeur angulaire (13) agencé dans le bras (10) pour mesurer la rotation de l'extrémité de rotation (12) autour de l'axe longitudinal (300) dudit bras.

5. Dispositif selon l'une des revendications 1 à 4, **caractérisé en ce que** le deuxième composant (106) de l'ensemble mobile (100) comporte deux disques coaxiaux (118; 107) reliés par un arbre creux (117), dont un premier disque (118) faisant partie du système d'accouplement à tocs successifs (110) et un second disque (107) portant, sur sa face interne (107.1), des organes de contact (122) qui coopèrent avec les organes de contact (121) portés par l'ensemble fixe (200).

6. Dispositif selon la revendication 5, **caractérisé en ce que** les organes de contact (122) portés par le second disque (107) du second composant (106) de l'ensemble mobile (100) comportent des pistes coaxiales (122.4) en forme de segments circulaires définissant la courte plage angulaire de rotation, et les organes de contact (121) portés par l'ensemble fixe (200) comportent au moins un bloc de frotteurs (121.2) dont les frotteurs (121.4) coopèrent avec les pistes respectives (122.4) des autres organes de contact (122).

7. Dispositif selon la revendication 6, **caractérisé en ce que** les organes de contact (121) portés par l'ensemble fixe (200) comportent deux blocs de frotteurs (121.2) espacés circonférentiellement d'un angle (b) correspondant sensiblement à la courte plage angulaire de rotation, de façon que les frotteurs (121.4) des deux blocs (121.2) soient au contact des pistes respectives (122.4) seulement dans une position centrale du second composant (106) de l'ensemble mobile (100) qui correspond à la position de fonctionnement normal.

8. Dispositif selon la revendication 6 ou la revendication 7, **caractérisé en ce que** la courte plage angulaire de rotation est de l'ordre de 20 à 30 degrés.

9. Dispositif selon l'une des revendications 6 à 8, **caractérisé en ce que** la coopération entre les frotteurs (121.4) du ou des blocs de frotteurs (121.2) et les pistes coaxiales (122.4) est obtenue par simple rotation relative.

10. Dispositif selon l'une des revendications 6 à 8, **caractérisé en ce que** la coopération entre les frotteurs (121.4) du ou des blocs de frotteurs (121.2) et les pistes coaxiales (122.4) est obtenue par translation axiale et rotation relatives.

11. Dispositif selon l'une des revendications 6 à 10, **caractérisé en ce que** les fils électriques de connexion (150) passant à l'intérieur des deux composants (105, 106) de l'ensemble mobile (100) sont reliés aux pistes coaxiales (122.4) portées par le second disque (107) du second composant (106) de l'ensemble mobile (100), le ou les blocs de frotteurs (121.2) portés par l'ensemble fixe (200) servant à liaison de fils électriques de connexion (151) associés à un ensemble de carte de codeur (20) solidaire de l'ensemble fixe (200).
